# EUROPÄISCHE PATENTSCHRIFT

(11) **EP 2 155 591 B1**
(45) Veröffentlichungstag und Bekanntmachung des Hinweises auf die Patenterteilung: **10.04.2013**
(21) Anmeldenummer: 08758187.2
(22) Anmeldetag: 16.06.2008
(51) Int. Cl.: B65G 57/06, B65G 57/24

(54) **VERFAHREN UND VORRICHTUNG ZUM STAPELN PLATTENFÖRMIGER KÖRPER**
METHOD AND DEVICE FOR STACKING PLATE-SHAPED BODIES
PROCÉDÉ ET DISPOSITIF D'EMPILAGE DE CORPS EN FORME DE PANNEAUX

(30) Priorität: 20.06.2007 DE 102007028418
(43) Veröffentlichungstag der Anmeldung: 24.02.2010
(73) Patentinhaber: Grenzebach Maschinenbau GmbH, 86663 Asbach-Bäumenheim (DE)
(72) Erfinder: SCHÄFERLING, Rudolf, 86657 Bissingen (DE)
(74) Vertreter: Kindermann, Peter
(86) Internationale Anmeldenummer: PCT/DE2008/000990
(87) Internationale Veröffentlichungsnummer: WO 2008/154903

(56) Entgegenhaltungen:
- EP-A- 0 359 920
- EP-A- 0 487 837
- DE-A1- 2 904 252
- DE-A1- 4 213 352
- DE-A1- 4 412 830
- JP-A- 61 094 927

## Beschreibung

Die Erfindung betrifft ein Verfahren und eine Vorrichtung zum Stapeln von plattenförmigen Dämmstoffen aus Mineralfasern, insbesondere aus Stein- und / oder Mineralfasern, bei dem mehrere Dämmstoffplatten mit ihren großen Oberflächen aneinander liegend angeordnet sind, wobei die Oberflächen der Dämmstoffplatten im Stapel vertikal ausgerichtet sind.
Dämmstoffe aus Mineralwolle bestehen aus glasig erstarrten Mineralfasern, die mit geringen Mengen eines Bindemittels, zumeist eines duroplastisch aushärtenden Kunststoffes prinzipiell punktweise miteinander verbunden sind. Die Mineralfasern werden aus einer Schmelze gewonnen, die in einem Zerfaserungsaggregat zerfasert wird. Bei der Herstellung von derartigen Dämmstoffen sind die Anteile organischer Substanz zu minimieren, um nach Möglichkeit die Einstufung in die Baustoffklasse "Nichtbrennbar nach DIN 4101, Teil 1" zu erreichen. Andererseits soll ein elastisches und gleichzeitig federndes Verhalten der einzelnen Mineralfasern innerhalb des Dämmstoffes erhalten bleiben. Die untere Grenze der Bindemittelgehalte wird durch den Erhalt der für den Gebrauch und die Handhabung erforderlichen Materialeigenschaften, wie zum Beispiel die Druckfestigkeit und die Zugfestigkeit, bestimmt. Um die Fasermasse zu hydrophobieren werden noch Imprägniermittel in Mengen von ca. 0,1 bis ca. 0,4 Prozent des Massenanteils hinzugefügt.
Handelsüblich werden Dämmstoffe aus Glaswolle und Steinwolle unterschieden. Glaswolle -Fasern werden aus silikatischen Schmelzen mit relativ hohem Alkaligehalt, gegebenenfalls auch Boroxiden, in der Weise hergestellt, dass die Schmelze durch die feinen Wandöffnungen eines rotierenden Körpers hindurch geleitet wird. Dabei entstehen relativ lange und glatte Mineralfasern, die mit Bindemitteln und Imprägniermitteln versehen, auf ein luftdurchlässiges Transportband fallen. Die spezifische Leistung eines derartigen Zerfaserungsaggregats ist mit einigen hundert Kilogramm Mineralfasern pro Stunde gering. Deshalb werden mehrere Aggregate mitsamt den zugehörigen Fallschächten hintereinander über einer Produktionslinie angeordnet.
Eine aus den Zerfaserungsaggregaten abgezogene endlose Faserbahn wird entsprechend der gewünschten Dicke und Rohdichte mehr oder weniger schnell abtransportiert. Die Aushärtung des die Struktur des herzustellenden Dämmstoffs fixierenden Bindemittels erfolgt in einem Härteofen, in dem Heißluft durch die Faserbahn hindurch geleitet wird. Anschließend wird die ausgehärtete Faserbahn seitlich beschnitten und beispielsweise in der Mitte in zwei Bahnen aufgetrennt, von denen nahezu verlustfrei Dämmstoffplatten mit einer bestimmten Länge und, im Rahmen der Bahnbreite, beliebigen Breiten abgetrennt werden können.

Dämmstoffe aus Steinfasern, insbesondere Dämmstoffplatten aus Steinfasern, lassen sich weniger leicht komprimieren als Dämmstoffe aus Glasfasern, da sie deutlich unterschiedliche Strukturen aufweisen, die sich im Wesentlichen in der in sich verwirbelten Form der kurzen Steinfasern zeigen, wobei die Steinfasern bereits auf dem Weg von der Zerfaserungsmaschine zu einem Transportband zu Flocken aggregieren. Aufgrund dieses Verhaltens werden trotz der gegenüber Dämmstoffen aus Glasfasern etwa 30 bis 59% geringeren Bindemittelmengen relativ hohe Druckwerte und Querzugwerte erreicht.
Da die sehr leistungsfähigen Zerfaserungsaggregate für die Zerfaserung einer Schmelze aus silikatischem Gestein einen hohen Materialdurchsatz erbringen, ist es erforderlich, die mit Bindemitteln und Imprägniermitteln versetzten Mineralfasern wegen ihrer raschen Abkühlung sehr schnell in Form einer Faserbahn abzutransportieren. Das geschieht in der Form eines möglichst dünnen so genannten Primärvlieses, welches über eine Pendelvorrichtung in möglichst flacher Lagerung quer auf einer zweiten, langsamer laufenden, Transporteinrichtung abgelegt wird. Durch das Aufpendeln des dünnen Primärvlieses werden Inhomogenitäten innerhalb des Primärvlieses, und damit in der daraus aufgebauten endlosen Faserbahn, ausgeglichen. Die daraus hergestellten Dämmstoffe weisen beispielsweise über die Breite der Produktionslinie und die Höhe der Faserbahn sehr enge Schwankungen der Rohdichte auf.

Dämmstoffplatten aus Steinfasern werden mit üblichen Abmessungen von 1 m oder 1,2 m Länge bei einer Breite von 0,6 m oder 0,625 m und Dicken von ca. 20 mm bis ca. 240 mm hergestellt.

Dämmstoffplatten werden in großen Mengen produziert und müssen deshalb nach der Formatierung in Stapeln geordnet, verpackt und versendet werden.

Aus der DE 37 36 759 A1 ist ein Plattenstapler mit einem Rahmen, in dem Transportmittel für Platten angeordnet sind, bekannt, wobei die Platten von einem Maschinenauslauf zu einer Kassette transportiert werden, in der sie gestapelt werden.
Als patentwürdig wird im Anspruch 1 dieser Druckschrift beansprucht, dass an der, der Kassette zugewandten, Seite des Rahmens eine Schwenkgabel in Rahmenseitenteilen gelagert ist, dass die Schwenkgabel aus der Horizontallage um einen Winkel bis zu 120° in eine aufgerichtete Lage verschwenkbar und wieder zurückschwenkbar ist, und dass ein doppelt wirkender Pneumatikzylinder eine Zahnstange hin und her bewegt, mit der ein Stirnrad auf einer Welle der Schwenkgabel kämmt.
Mit diesem bekannten Plattenstapler können jedoch nur horizontal antransportierte Einzelplatten hochkant in einer Kassette gestapelt werden. Eine waagrechte Lagerung dieser Platten ohne die Einbringung in eine Kassette und damit eine beliebige Weiterverarbeitung ist mit dem aus der DE 37 36 759 A1 bekannten Plattenstapler nicht möglich.

Aus der EP 1 155 998 A1 ist ein Verfahren zum Stapeln von insbesondere stoß- oder biegeempfindlichen Platten mittels eines Plattenstaplers bekannt, der einen, die Platten im Wesentlichen in Richtung ihrer Flächenerstreckung heranfördernden, Förderer und einen sich daran anschließenden Stapeltisch umfasst, dessen Höhe entsprechend dem Stapelfortschritt im Sinne einer geringen Höhendifferenz zwischen dem Förderer und der Stapeloberseite verstellt wird.
Als erfindungswesentlich wird hier nach dem Kennzeichen des Anspruchs 1gesehen, dass man die Platten auf die Stapeloberseite aufgleiten lässt, während sie noch von dem Förderer gestützt sind.
Der Höhenabstand zwischen der Stapeloberseite und dem Ende des Förderers, gemessen lotrecht zur Förderrichtung, soll hierbei geringer als ein Zwanzigstel der kleineren Flächenabmessung (Breite oder Länge) der Platten sein.
Die Vorrichtung zur Durchführung des Verfahrens zeichnet sich dadurch aus, dass zwei Stapeltische in Richtung des Förderers hintereinander angeordnet sind und im Wechsel an den Förderer anschließbar sind, wobei der Förderer von einer oder mehreren angeordneten Zungen und der, dem Förderer nähere, Stapeltisch aus einem oder mehreren jeweils versetzt zu den Zungen des Förderers angeordneten Stützen gebildet ist.

Hierdurch wird gewährleistet, dass für den Vorgang der Umstellung des Förderbandes vom vorderen Stapeltisch auf den hinteren Stapeltisch sich zu dem Zeitpunkt zu dem die letzte Platte, die auf dem Stapel des vorderen Stapeltisches abzulegen ist, das Förderband verlassen hat, sich die folgende Platte bereits über dem Stapel des hinteren Stapeltisches befindet.

Dies bedeutet zwar eine Zeitersparnis zu den bekannten Verfahren des Standes der Technik, jedoch müssen hierbei immer noch alternativ zwei Stapeltische verwendet werden. Diese Maßnahme bedeutet für die Weiterverarbeitung bzw. Weiterbeförderung eine zusätzliche Erschwernis in zeitlicher und technischer Hinsicht.

Aus der JP 61 094 927 A ist eine Vorrichtung gemäß dem Oberbegriff des Anspruchs 1 bekannt, die es ermöglicht, ein beschichtetes Blech automatisch und effizient aufzuschichten. Hierbei wird dieses Blech über eine Rollvorrichtung mittels eines Schiebers über einen Tisch, der angehoben werden kann, auf eine Palette geschoben

Es ist daher die Aufgabe der vorliegenden Erfindung, eine Vorrichtung und ein Verfahren zum horizontalen Stapeln großflächiger Platten, insbesondere aus Mineralien, zu schaffen, die es ermöglichen, den Stapelvorgang schnell, sicher und ohne eine zusätzliche Ablagefläche zu bewerkstelligen.

Diese Vorrichtung wird durch die Vorrichtung nach Anspruch 1 bzw. das Verfahren nach Anspruch 4 gelöst.

In den Unteransprüchen sind weitere vorteilhafte Ausführungsbeispiele der Erfindung gekennzeichnet.

Im Wesentlichen besteht diese Lösung darin, dass die Platten über spezielle Beförderungselemente nach einem besonderen Organisationsplan in der Weise befördert werden, dass der zeitliche Aufwand ein Minimum erreicht.

Im Folgenden werden die erfindungsgemäßen Merkmale näher beschrieben.

Es zeigen im Einzelnen:
Figur 1: eine 3D- Zeichnung der Vorrichtung
Figur 2: eine detaillierte Draufsicht auf die Vorrichtung
Figur 3: eine schematische Darstellung der Funktionsträger
Figur 4: ein erstes Detail des Funktionsablaufs
Figur 5: ein zweites Detail des Funktionsablaufs
Figur 6: ein drittes Detail des Funktionsablaufs
Figur 7: ein viertes Detail des Funktionsablaufs
Figur 8: ein fünftes Detail des Funktionsablaufs
Figur 9: ein sechstes Detail des Funktionsablaufs

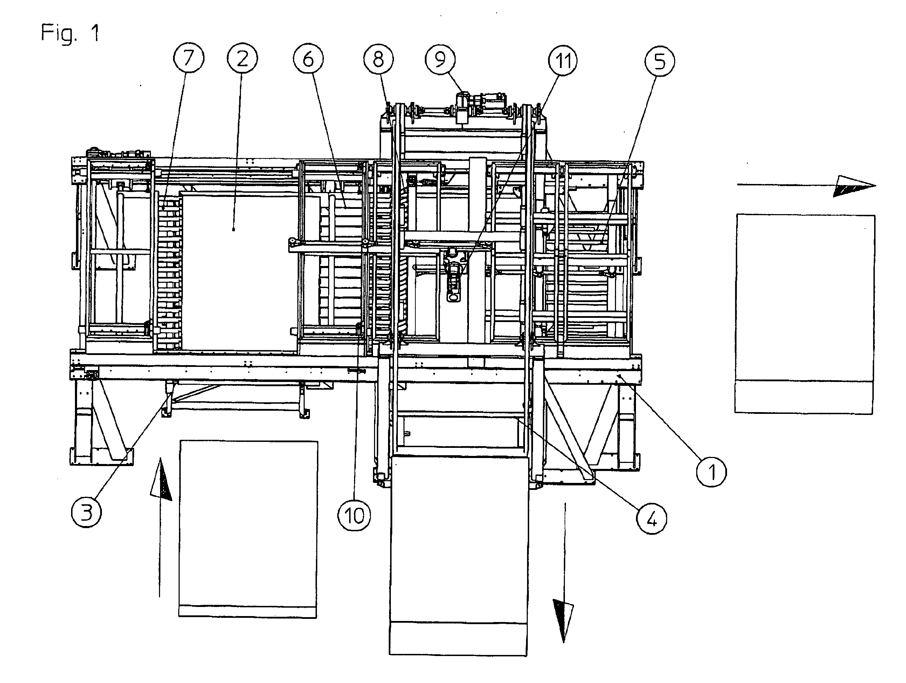

In der Figur 1 ist der Grundrahmen ( 1 ) mit seiner Ständerkonstruktion aus der Perspektive eines Betrachters in Augenhöhe zu erkennen. Auf der linken Seite dieses Grundrahmens ist eine Mineralwolleplatte ( 2 ) gezeigt, die von einem zuführenden Mittel, zum Beispiel einem Förderband oder der Rollenbahn ( 3 ), an die gezeigte Stelle befördert wurde. Im Vordergrund ist eine Mineralwolleplatte ( 2 ) in der durch den zugeordneten Pfeil gekennzeichneten Richtung skizziert.
An dieser Stelle wird durch eine, nicht gezeigte Kamera - Anlage überwacht ob die betreffende Platte beschädigt ist oder dem folgenden Stapelprozess zugeführt werden kann. Dies ist zum Beispiel über die automatische Überwachung des Lichtraumprofils möglich das, in gewissen Toleranzen, sich der Kamera-Anlage bei einer einwandfreien Platte bietet. Mit dem Begriff "Lichtraumprofil" wird jeder Autofahrer bei einer Straßenverengung durch Bäume konfrontiert. Da die erfindungsgemäße Vorrichtung nicht nur für Mineralwolleplatten ( 2 ) geeignet ist, können an dieser Stelle auch andere Kriterien des Stapelgutes überprüft werden. Ist es bei bestimmten Arten von Platten erforderlich, dass im Produktionsprozess ein bestimmtes Gewicht eingehalten wird, wird dies ebenfalls an der betreffenden Stelle automatisch überwacht. Sollte sich ergeben, dass eine Platte ( 2 ) als Ausschuss zu werten ist, wird durch eine, hier nicht gezeigte, Vorrichtung diese Platte automatisch aussortiert.

Im rechten Teil der Fig. 1 ist der eigentliche Plattenstapler in der Form der gezeigten Rahmenkonstruktion mit dem zugehörigen Bandförderer ( 4 ) für die fertigen Plattenstapel dargestellt.

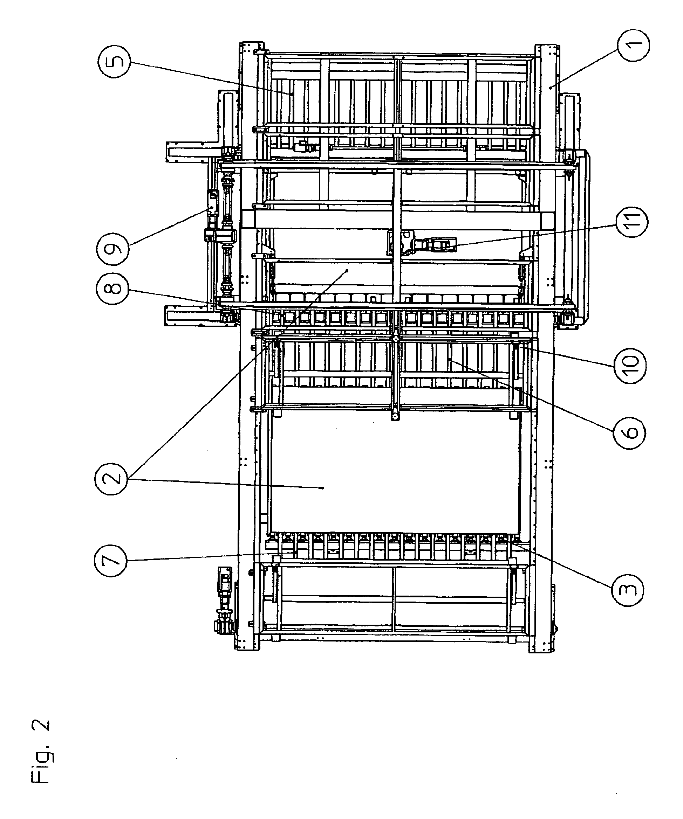

In der Fig.2 ist die Anlage der Fig.1 aus der Sicht senkrecht von oben gezeigt.
Auf der linken Seite ist wiederum eine Mineralwolleplatte ( 2 ), hier im wahren Seitenverhältnis zu sehen, die von dem Schiebekamm ( 7 ) auf dem vorderen Tablettkamm ( 6 ) nach rechts befördert wird.

Der Rückhaltekamm ( 8 ) ist in dieser Darstellung von oben naturgemäß nicht sehr deutlich zu erkennen.
Auf der rechten Seite ist der hintere Tablettkamm ( 5 ) von oben dargestellt.
Der zugehörige Antrieb ( 9 ) für das gesamte Tablett ist oberhalb der eigentlichen Stapelvorrichtung zu erkennen.
Der Antrieb für den Rückhaltekamm ( 8 ) ist mit der Nummer ( 10 ) bezeichnet und der Antrieb für den vorderen Tablettkamm ( 6 ) und den hinteren Tablettkamm ( 5 ) trägt die Nummer ( 11 ).

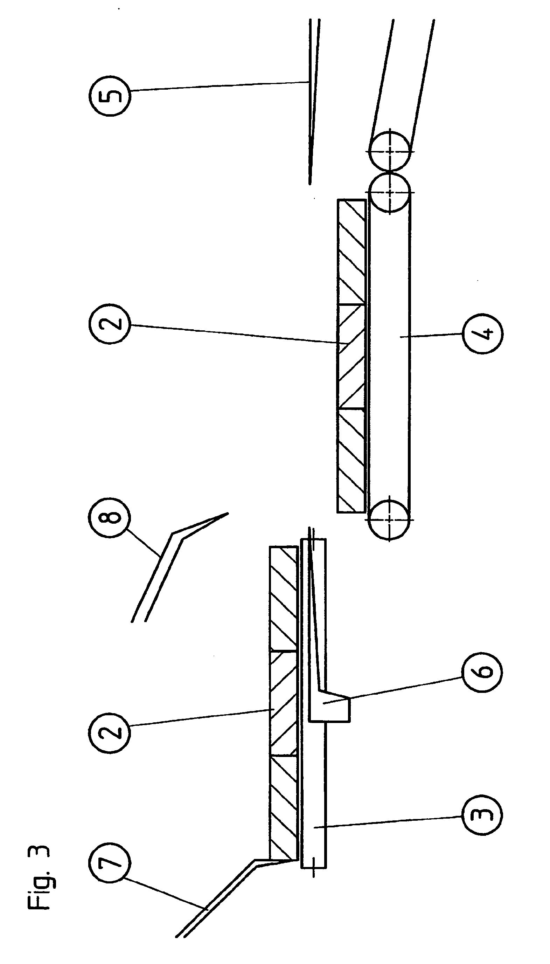

Die schematische Darstellung der einzelnen Funktionsträger zeigt die Fig.3 im Querschnitt. Der Schiebekamm ( 7 ) schiebt hier eine Mineralwolleplatte ( 2 ) auf den vorderen Tablettkamm ( 6 ), der Rückhaltekamm ( 8) steht in seiner Ausgangsposition und eine weitere Mineralwolleplatte ( 2 ) liegt auf dem Bandförderer für den Plattenstapel, der in Aktion tritt, wenn ein Stapel die gewünschte Höhe erreicht hat.
Die folgenden Figuren zeigen detaillierte Zwischenschritte im Ablaufprozess des gesamten Stapelvorgangs.

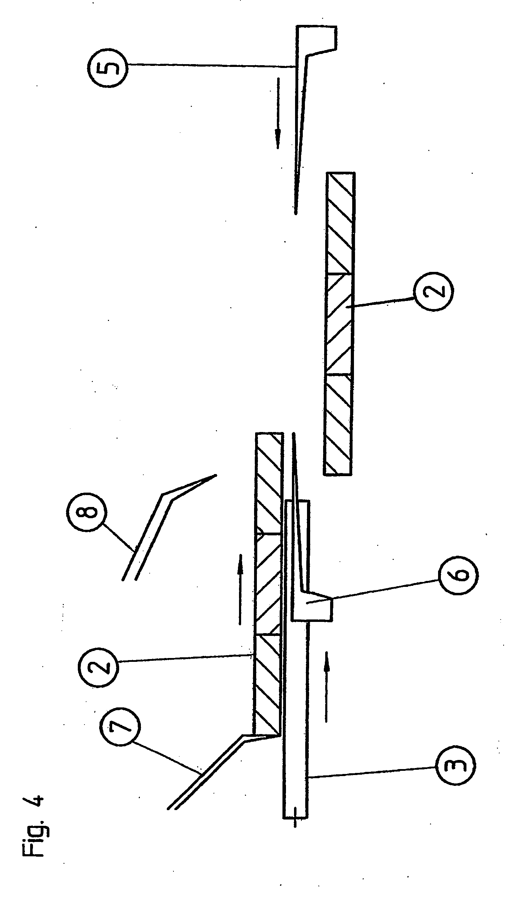

So ist in der Fig. 4 zu sehen, wie der Schiebekamm ( 7 ) eine Mineralwolleplatte ( 2 ) auf den vorderen Tablettkamm ( 6 ) schiebt, der zusammen mit dem hinteren Tablettkamm das Tablett schließt, während der Rückhaltekamm ( 8 ) in Warteposition steht. Auf dem Bandförderer ( 4 ) für den Plattenstapel liegt bereits eine Mineralwolleplatte ( 2 ).

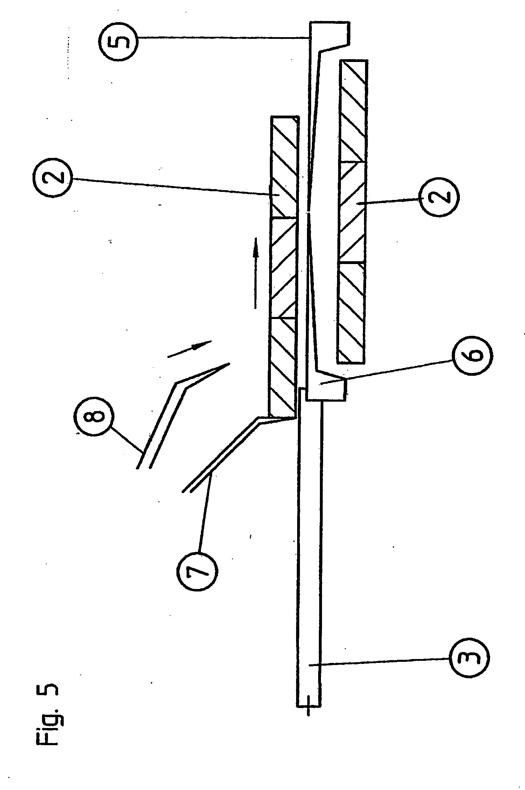

In der Fig. 5 ist die betreffende Mineralwolleplatte ( 2 ) von dem Schiebekamm ( 7 ) bereits ein Stück weiter auf das geschlossene Tablett geschoben, das sich aus dem hinteren Tablettkamm ( 6 ) und dem vordern Tablettkamm ( 6 ) in der beiderseitigen Schließstellung ergibt. Der Rückhaltekamm ( 8 ) ist im Begriff diese Platte am Zurückgleiten zu hindern wenn der vordere Tablettenkamm ( 6 ) beginnt, sich entgegengesetzt zu der Richtung zu bewegen aus der die Platte ( 2 ) kam, weil die Platte ( 2 ) ihre Endstellung erreicht hat. Im oberen Bildteil ist die beginnende Abwärtsbewegung des Rückhaltekamms ( 8 ) aus der Anfangsposition skizziert.

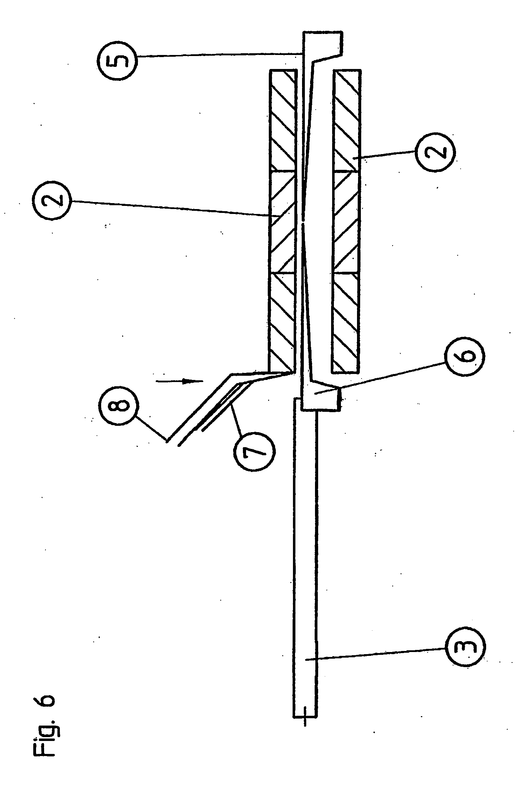

In der Fig. 6 ist der Zeitpunkt dargestellt zu dem der Schiebekamm ( 7 ) seine Fahrt beendet hat und der Rückhaltekamm ( 8 ) sich von oben in die Zwischenräume gesenkt hat, die der Schiebekamm ( 7 ) frei gelassen hat. Dies ist notwendig da die beschriebenen Vorgänge zeitlich sehr schnell ablaufen und sich ohne dieses Ineinandergreifen der betreffenden kammartigen Strukturen der geforderte schnelle zeitliche Ablauf nicht realisieren lässt.

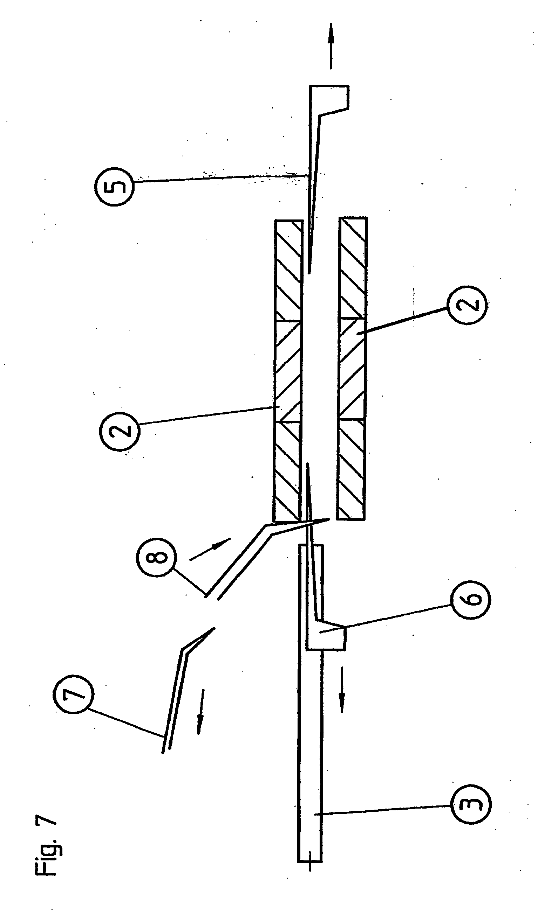

In der Fig. 7 ist zu erkennen, wie sich der vordere Tablettkamm ( 6 ) und der hintere Tablettkamm ( 5 ) auseinander bewegen um den Platz für das Durchrutschen der Platte ( 2 ) frei zumachen. Der Rückhaltekamm ( 8 ) ist in seiner Abwärtsbewegung fortgefahren und gewährleistet mit dieser Bewegung dass die betreffende Platte ( 2 ) genau an die richtige Stelle auf dem bereits vorhandenen Stapel gleitet. Hierbei muss bedacht werden, dass die entsprechenden Figuren Schnittzeichnungen zeigen und die gezeigte Kante des Rückhaltekamms ( 8 ) in der Praxis einer Fläche entspricht, an der sich die jeweilige Platte ausrichtet.

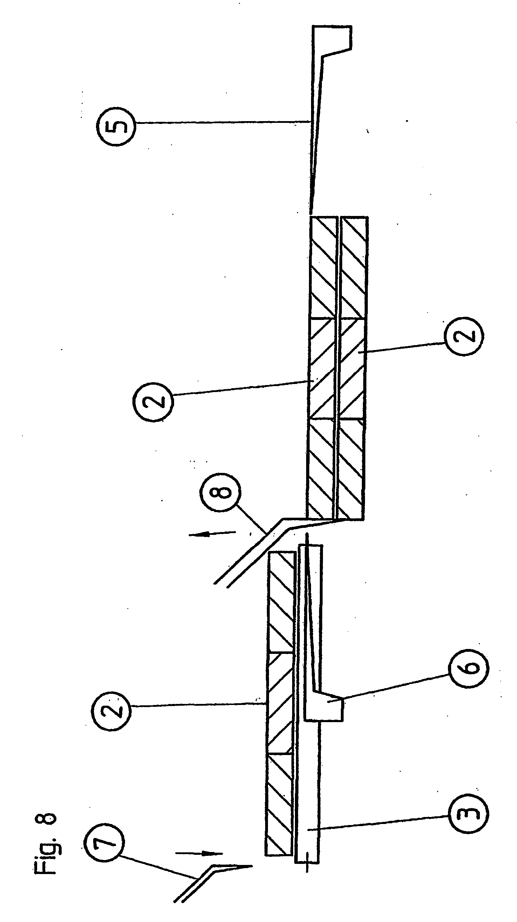

In der Fig. 8 ist die betreffende Platte ( 2 ) auf der vorherigen Platte ( 2 ) abgelegt, der Stapel hat sich entsprechend der Dicke der zu stapelnden Platten gesenkt und von links beginnt der Schiebekamm ( 7 ) sich schon der nächsten Platte ( 2 ) zu nähern. Der Rückhaltekamm ( 8 ) befindet sich bereits wieder in einer Aufwärtsbewegung.

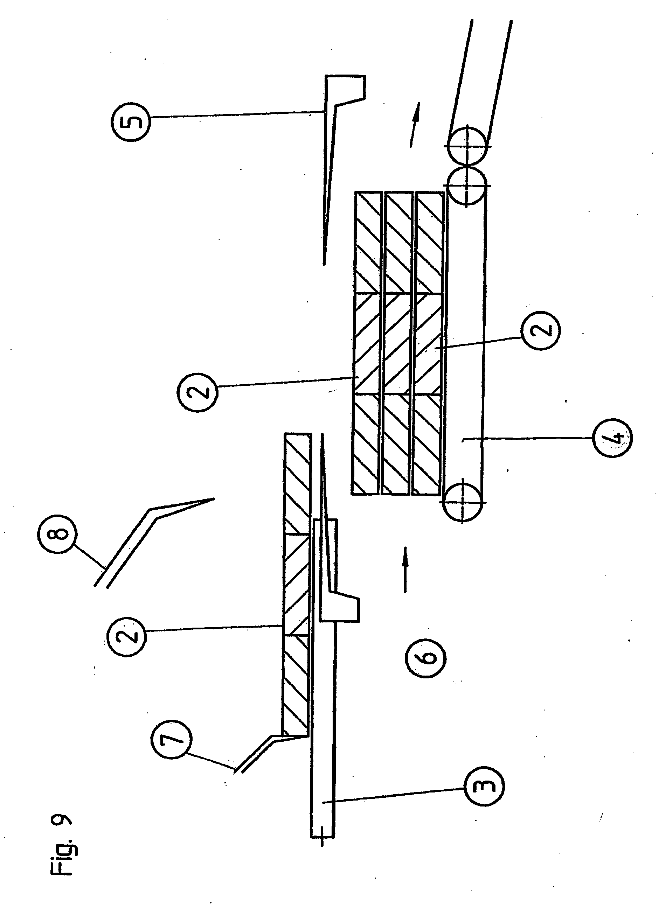

Die Darstellung in der Fig. 9 entspricht, bis auf die Höhe des Plattenstapels, der Darstellung in der Fig. 4.

Da die beschriebenen Bewegungsabläufe in hoher Geschwindigkeit ablaufen, unterliegen die, die jeweiligen Platten ( 2 ) bewegenden, Steuerungselemente hohen Beschleunigungskräften. Sie müssen sich zudem präzise zu bestimmten Taktzeiten an bestimmten Orten befinden. Dies bedeutet, dass diese Steuerungselemente wie der hintere und der vordere Tablettkamm ( 6,5 ), der Schiebekamm ( 7 ) sowie der Rückhaltekamm ( 8 ) aus leichtem aber gleichwohl sehr stabilem Material gefertigt sein müssen. Hier kommt vor allem GFK infrage.
Für die exakte Ausführung der beschriebenen Funktionsabläufe stehen moderne Stellmotoren mit den entsprechenden Steuerungsprogrammen zur Verfügung.

Zur Erfassung der jeweiligen Stellung der betreffenden Steuerungselemente werden die für den jeweiligen Anwendungsfall dem Fachmann bekannte Sensoren verwendet.
Die programmtechnische Konzipierung eines diesen Funktionsablauf gewährleistenden Rechnerprogramms ist aufgrund der beschriebenen Vorgänge für einen Fachmann ebenfalls an die jeweiligen örtlichen Gegebenheiten anpassbar.

### Bezugszeichenliste

- ( 1 ): Grundrahmen
- ( 2 ): plattenförmiger Körper, Mineralwolleplatten
- ( 3 ): Rollenbahn von der Fertigungslinie
- ( 4 ): Bandförderer für Plattenstapel
- ( 5 ): hinterer Tablettkamm
- ( 6 ): vorderer Tablettkamm
- ( 7 ): Schiebekamm
- ( 8 ): Rückhaltekamm
- ( 9 ): Tablettantrieb
- ( 10 ): Antrieb für Rückhaltekamm
- ( 11 ): Antrieb für Tablettkämme (hinterer, vorderer)

## Patentansprüche

1. Vorrichtung zum Stapeln plattenförmiger Körper mit:
einer Fläche, die aus einem vorderen Tablettkamm (6) und einem hinteren Tablettkamm (5) besteht, einem Schiebekamm (7) zum Schieben jeweils eines plattenförmigen Körpers (2) auf die Fläche,
einer Fördervorrichtung (3) zur Beförderung jeweils eines plattenförmigen Körpers (2) in den Bereich des Schiebekamms (7),
**dadurch gekennzeichnet,**
**dass** die Vorrichtung einen Rückhaltekamm (8) aufweist, wobei der Rückhaltekamm (8) und der Schiebekamm (7) kammartige Strukturen aufweisen, die ineinander greifen, und wobei der Rückhaltekamm (8) eine rückführende Bewegung des plattenförmigen Körpers (2), wenn sich der vordere Tablettkamm (6) und der hintere Tablettkamm (5) auseinander bewegen, verhindert und die Fallbewegung des plattenförmigen Körpers (2) auf einen Plattenstapel steuert.

2. Vorrichtung nach Anspruch 1,
**dadurch gekennzeichnet,**
**dass** der vordere Tablettkamm (6) und der hintere Tablettkamm (5), der Schiebekamm (7) sowie der Rückhaltekamm (8) aus zugleich leichtem und biegefestem Material bestehen,
**dass** die erforderlichen Bewegungen durch Stellmotoren erfolgen und
**dass** die Vorrichtung eine zentrale Schmieranlage mit datentechnischer Überwachung aufweist.

3. Vorrichtung nach Anspruch 2,
**dadurch gekennzeichnet,**
**dass** die Stellmotoren mit Steuerungsprogrammen gesteuert werden und dass für jeden Steuerungsvorgang eine zulässige Zeittoleranz bestimmt wird, deren Einhaltung überwacht wird und wobei bei Überschreiten einer Toleranzgrenze ein Alarm ausgelöst wird.

4. Verfahren zum Stapeln plattenförmiger Körper mit den folgenden Verfahrensschritten:
a) ein plattenförmigen Körper (2) gelangt mittels einer Fördervorrichtung (3) auf eine Stapelvorrichtung,
b) der plattenförmige Körper (2) wird in Richtung auf eine teilbare Fläche (5, 6) geschoben,
c) ein Rückhaltemittel (8) bewegt sich in vertikaler Richtung nach unten,
d) ein vorderer Teil (6) der teilbaren Fläche beginnt sich zu einem bestimmten Zeitpunkt entgegen der Förderrichtung des plattenförmigen Körpers (2) zu bewegen, wobei gleichzeitig das Rückhaltemittel (8) verhindert, dass der plattenförmige Körper (2) dieser Bewegung folgt,
e) ein hinterer Teil (5) der teilbaren Fläche bewegt sich in die entgegen gesetzte Richtung wie der vordere Teil (6), wobei das Rückhaltemittel (8) in seiner Abwärtsbewegung fortgefahren ist und mit dieser Bewegung gewährleistet, dass der plattenförmige Körper (2) genau in eine Auffangposition gleitet,
f) der plattenförmige Körper (2) folgt bei der Freigabe durch die teilbare Fläche (5, 6) der Schwerkraft und fällt in die Auffangposition.

5. Verfahren nach Anspruch 4,
**dadurch gekennzeichnet,**
**dass** zu Beginn des Stapelprozesses fertigungsrelevante Parameter des Stapelgutes überwacht werden, und Ausschuss automatisch aussortiert wird.

## Claims

1. Apparatus for stacking plate-shaped bodies having:
a surface which comprises a front tablet comb (6) and a rear tablet comb (5), a pushing comb (7) for pushing in each case one plate-shaped body (2) onto the surface,
and a conveying apparatus (3) for conveying in each case one plate-shaped body (2) into the region of the pushing comb (7),
**characterized in that** the apparatus has a retaining comb (8), the retaining comb (8) and the pushing comb (7) having comb-like structures which engage into one another, and the retaining comb (8) preventing a return movement of the plate-shaped body (2) when the front tablet comb (6) and the rear tablet comb (5) move apart from one another and controlling the falling movement of the plate-shaped body (2) onto a plate stack.

2. Apparatus according to Claim 1, **characterized in that** the front tablet comb (6) and the rear tablet comb (5), the pushing comb (7) and the retaining comb (8) are composed of material which is at the same time lightweight and flexurally stable, **in that** the required movements are effected by actuating motors, and **in that** the apparatus has a central lubricating system with data monitoring.

3. Apparatus according to Claim 2, **characterized in that** the actuating motors are controlled by way of control programs, and **in that** a permissible time tolerance is defined for every control operation, the observance of which time tolerance is monitored, an alarm being triggered if a tolerance limit is exceeded.

4. Method for stacking plate-shaped bodies having the following method steps:
a) a plate-shaped body (2) passes onto a stacking apparatus by means of a conveying apparatus (3),
b) the plate-shaped body (2) is pushed in the direction of a divisible surface (5, 6),
c) a retaining means (8) moves downwards in a vertical direction,
d) a front part (6) of the divisible surface begins to move counter to the conveying direction of the plate-shaped body (2) at a defined time, the retaining means (8) at the same time preventing the plate-shaped body (2) from following this movement,
e) a rear part (5) of the divisible surface moves in the opposite direction to the front part (6), the retaining means (8) continuing its downward movement and ensuring by way of said movement that the plate-shaped body (2) slides precisely into a collecting position,
f) upon being released by the divisible surface (5, 6), the plate-shaped body (2) follows gravity and falls into the collecting position.

5. Method according to Claim 4, **characterized in that** production-relevant parameters of the stacked material are monitored at the beginning of the stacking process, and defective material is rejected automatically.

## Revendications

1. Dispositif d'empilage de corps en forme de panneau, comprenant :
une surface qui se compose d'un peigne en plateau avant (6) et d'un peigne en plateau arrière (5),
un peigne coulissant (7) pour faire coulisser à chaque fois un corps en forme de panneau (2) sur la surface,
un dispositif de transport (3) pour transporter à chaque fois un corps en forme de plateau (2) dans la zone du peigne coulissant (7),
**caractérisé en ce**
**que** le dispositif présente un peigne de retenue (8), le peigne de retenue (8) et le peigne coulissant (7) présentant des structures de type peigne qui s'engagent l'une dans l'autre, et le peigne de retenue (8) empêchant un mouvement de recul du corps en forme de panneau (2) lorsque le peigne en plateau avant (6) et
le peigne en plateau arrière (5) se séparent l'un de l'autre et commandant le mouvement de chute du corps en forme de panneau (2) sur une pile de panneaux.

2. Dispositif selon la revendication 1,
**caractérisé en ce**
**que** le peigne en plateau avant (6) et le peigne en plateau arrière (5), le peigne coulissant (7) ainsi que le peigne de retenue (8) se composent d'un matériau à la fois léger et inflexible,
**que** les mouvements nécessaires sont réalisés par des motoréducteurs et
en ce que le dispositif présente un système de lubrification central avec surveillance informatisée.

3. Dispositif selon la revendication 2,
**caractérisé en ce**
**que** les motoréducteurs sont commandés par des programmes de commande et en ce que pour chaque opération de commande est définie une tolérance de temps supplémentaire dont l'observation est surveillée et une alarme étant déclenchée en cas de dépassement d'une limite de tolérance.

4. Procédé d'empilage de corps en forme de panneau, comprenant les étapes suivantes :
a) un corps en forme de panneau (2) est amené par un dispositif de transport (3) sur un dispositif d'empilage,
b) le corps en forme de panneau (2) est glissé en direction d'une surface divisible (5, 6),
c) des moyens de retenue (8) se déplacent dans le sens vertical vers le bas,
d) une partie avant (6) de la surface divisible commence, à un instant donné, à se déplacer en sens inverse de la direction de transport du corps en forme de panneau (2), les moyens de retenue (8) empêchant en même temps que le corps en forme de panneau (2) suive ce mouvement,
e) une partie arrière (5) de la surface divisible se déplace dans la direction opposée comme la partie avant (6), les moyens de retenue (8) ayant poursuivi leur mouvement descendant et garantissant avec ce mouvement que le corps en forme de panneau (2) coulisse exactement dans une position de réception,
f) le corps en forme de panneau (2) suit la force de gravité lors de sa libération par la surface divisible (5, 6) et chute en position de réception.

5. Procédé selon la revendication 4,
**caractérisé en ce**
**qu'**au début du processus d'empilage, des paramètres concernant la fabrication du produit empilé sont surveillés et les pièces manquées sont automatiquement rejetées.
